# EUROPEAN PATENT APPLICATION

(11) **EP 2 306 741 A2**
(43) Date of publication of application: **06.04.2011**
(21) Application number: 10176647.5
(22) Date of filing: 14.09.2010
(51) Int. Cl.: H04N 13/00

(54) **Image signal processing apparatus, method and program for inputting images and control data to an omnidirectional stereoscopic image display apparatus**

(30) Priority: 05.10.2009 JP 2009231674
(71) Applicant: Sony Corporation, Minato-ku Tokyo 108-0075 (JP)
(72) Inventor: Ishikawa, Hirotaka, Minato-ku, Tokyo 108-0075 (JP); Yasunaga, Hiroaki, Minato-ku, Tokyo 108-0075 (JP); Ito, Katsuhisa, Minato-ku, Tokyo 108-0075 (JP)
(74) Representative: Turner, James Arthur

(57) **Abstract**

An image signal processing apparatus that supplies entire-circumference viewpoint images including plural viewpoint images respectively corresponding to plural viewpoints provided on a circumference around a subject to an image display apparatus that displays a stereoscopic image of the subject seen from an entire circumference, includes: buffering means for buffering the input entire-circumference viewpoint images; generating means for arranging the buffered entire-circumference viewpoint images on a frame of arbitrary video standards to generate the frame of the arbitrary video standards; and replacing means for replacing pixel values of a pixel in a predetermined position on the generated frame by control data for controlling the image display apparatus and outputting the control data as video signals of the arbitrary video standards.

## Description

The present invention relates to an image signal processing apparatus, an image signal processing method, an image display apparatus, an image display method, a program, and an image display system, preferably (though not exclusively) used when a stereoscopic image of a subject is displayed, for example.

In related art, there have been technologies of displaying images that can be stereoscopically viewed on a flat display employed in a television receiver or the like. The technology may use disparity of right and left eyes of a person who watches the display. Specifically, for example, an image for the left eye and an image for the right eye are displayed on the same flat display and viewed through a polarizing filter for the left eye to see only the image for the left eye and the right eye to see only the image for the right eye, and thereby, a stereoscopic view is realized.

On the other hand, many entire circumference stereoscopic image display apparatuses that can display a stereoscopic image over the entire circumference of a subject using plural images at different viewpoints (hereinafter, referred to as "viewpoint images") imaged from plural viewpoints provided on a circumference around the subject (or generated on the assumption of the states of the subject seen from the entire circumference by computer graphics) have been proposed (see JP-A-2004-177709 or JP-A-2005-114771).

The entire circumference stereoscopic image display apparatuses have their display units in cylindrical shapes and display images of a subject stereoscopically visible for a user who watches the side surface of the cylindrical shape from an arbitrary direction.

Now, in NTSC (National Television System Committee) signals supplied to a flat display in related art as represented by a television receiver, display of the flat display is controlled by including control signals such as synchronization signals between image data and transmitting the data.

On the other hand, it is also necessary to input entire-circumference viewpoint images and control data for controlling the display of the entire circumference stereoscopic image display apparatus to the above described entire circumference stereoscopic image display apparatus. However, under the present circumstances, a standard method for inputting the entire-circumference viewpoint images and control data to the entire circumference stereoscopic image display apparatus is not established.

Thus, it is desirable to enable input of entire-circumference viewpoint images of a subject and control data to an entire circumference stereoscopic image display apparatus using a method having general versatility.

Various respective aspects and features of the invention are defined in the appended claims. Combinations of features from the dependent claims may be combined with features of the independent claims as appropriate and not merely as explicitly set out in the claims.

According to a first embodiment of the invention, there is provided an image signal processing apparatus that supplies entire-circumference viewpoint images including plural viewpoint images respectively corresponding to plural viewpoints provided on a circumference around a subject to an image display apparatus that displays a stereoscopic image of the subject seen from an entire circumference, including: buffering means for buffering the input entire-circumference viewpoint images; generating means for arranging the buffered entire-circumference viewpoint images on a frame of arbitrary video standards to generate the frame of the arbitrary video standards; and replacing means for replacing pixel values of a pixel in a predetermined position on the generated frame by control data for controlling the image display apparatus and outputting the control data as video signals of the arbitrary video standards.

The replacing means may replace the lowermost bit of the pixel values of the pixel in the predetermined position on the generated frame by the control data.

The replacing means may replace the entire of the pixel values of the pixel in the predetermined position on the generated frame by the control data.

The replacing means may replace the pixel values of pixels in plural predetermined positions on the generated frame by the control data, and thereby, multiplexes and recodes the control data.

The control data may contain information for commanding the image display apparatus whether to output the input video signals to another display or not.

According to the first embodiment of the invention, there is also provided an image signal processing method of an image signal processing apparatus that supplies entire circumference viewpoint images including plural viewpoint images respectively corresponding to plural viewpoints provided on a circumference around a subject to an image display apparatus that displays a stereoscopic image of the subject seen from an entire circumference, including the steps of: by the image signal processing apparatus, the buffering step of buffering the input entire-circumference viewpoint images; the generating step of arranging the buffered entire-circumference viewpoint images on a frame of arbitrary video standards to generate the frame of the arbitrary video standards; and the replacing step of replacing pixel values of a pixel in a predetermined position on the generated frame by control data for controlling the image display apparatus and outputting the control data as video signals of the arbitrary video standards.

According to the first embodiment of the invention, there is also provided a control program of an image signal processing apparatus that supplies entire-circumference viewpoint images including plural viewpoint images respectively corresponding to plural viewpoints provided on a circumference around a subject to an image display apparatus that displays a stereoscopic image of the subject seen from an entire circumference, and the program allows a computer of the image signal processing apparatus to execute processing including the steps of: the buffering step of buffering the input entire-circumference viewpoint images; the generating step of arranging the buffered entire-circumference viewpoint images on a frame of arbitrary video standards to generate the frame of the arbitrary video standards; and the replacing step of replacing pixel values of a pixel in a predetermined position on the generated frame by control data for controlling the image display apparatus and outputting the control data as video signals of the arbitrary video standards.

In the first embodiment of the invention, the input entire-circumference viewpoint images are buffered, the buffered entire-circumference viewpoint images are arranged on the frame of arbitrary video standards and the frame of the arbitrary video standards is generated, and the pixel values of the pixel in the predetermined position on the generated frame are replaced by the control data for controlling the image display apparatus and output as video signals of the arbitrary video standards.

According to a second embodiment of the invention, there is provided an image display apparatus that displays a stereoscopic image of a subject seen from an entire circumference based on video signals input from an image signal processing apparatus including buffering means for buffering entire-circumference viewpoint images including plural viewpoint images respectively corresponding to plural viewpoints provided on a circumference around the subject, generating means for arranging the buffered entire-circumference viewpoint images on a frame of arbitrary video standards to generate the frame of the arbitrary video standards, and replacing means for replacing pixel values of a pixel in a predetermined position on the generated frame by control data for controlling the image display apparatus and outputting the control data as video signals of the arbitrary video standards, including: extracting means for extracting the control data from the video signals; and display control means for reading out the entire-circumference viewpoint images from the video signals and allowing a display to display the read out entire-circumference viewpoint images according to the extracted control data.

The image display apparatus of the second embodiment of the invention may further include output means for outputting the input video signals to another display in response to information for commanding whether to output the input video signals to the other display or not contained in the control data.

According to the second embodiment of the invention, there is also provided an image display method of an image display apparatus that displays a stereoscopic image of a subject seen from an entire circumference based on video signals input from an image signal processing apparatus including buffering means for buffering entire-circumference viewpoint images including plural viewpoint images respectively corresponding to plural viewpoints provided on a circumference around the subject, generating means for arranging the buffered entire-circumference viewpoint images on a frame of arbitrary video standards to generate the frame of the arbitrary video standards, and replacing means for replacing pixel values of a pixel in a predetermined position on the generated frame by control data for controlling the image display apparatus and outputting the control data as video signals of the arbitrary video standards, including the steps of: by the image display apparatus, the extracting step of extracting the control data from the video signals; and the display control step of reading out the entire-circumference viewpoint images from the video signals and allowing a display to display the read out entire-circumference viewpoint images according to the extracted control data.

According to the second embodiment of the invention, there is also provided a control program of an image display apparatus that displays a stereoscopic image of a subject seen from an entire circumference based on video signals input from an image signal processing apparatus including buffering means for buffering entire-circumference viewpoint images including plural viewpoint images respectively corresponding to plural viewpoints provided on a circumference around the subject, generating means for arranging the buffered entire-circumference viewpoint images on a frame of arbitrary video standards to generate the frame of the arbitrary video standards, and replacing means for replacing pixel values of a pixel in a predetermined position on the generated frame by control data for controlling the image display apparatus and output the control data as video signals of the arbitrary video standards, and the program allows a computer of the image display apparatus to execute processing including the steps of: the extracting step of extracting the control data from the video signals; and the display control step of reading out the entire-circumference viewpoint images from the video signals and allowing a display to display the read out entire-circumference viewpoint images according to the extracted control data.

In the second embodiment of the invention, the control data is extracted from the video signals, the entire-circumference viewpoint images are read out from the video signals, and the read out entire-circumference viewpoint images are displayed on a display according to the extracted control data.

According to a third embodiment of the invention, there is provided an image display system including: an image display apparatus that displays a stereoscopic image of a subject seen from an entire circumference; and an image signal processing apparatus that supplies entire-circumference viewpoint images including plural viewpoint images respectively corresponding to plural viewpoints provided on a circumference around the subject to the image display apparatus, wherein the image signal processing apparatus includes buffering means for buffering the input entire-circumference viewpoint images, generating means for arranging the buffered entire-circumference viewpoint images on a frame of arbitrary video standards to generate the frame of the arbitrary video standards, and replacing means for replacing pixel values of a pixel in a predetermined position on the generated frame by control data for controlling the image display apparatus and outputting the control data as video signals of the arbitrary video standards, and wherein the image display apparatus includes extracting means for extracting the control data from the video signals input from the image signal processing apparatus, and display control means for reading out the entire-circumference viewpoint images from the video signals and allowing a display to display the read out entire-circumference viewpoint images according to the extracted control data.

In the third embodiment of the invention, by the image signal processing apparatus, the input entire-circumference viewpoint images are buffered, the buffered entire-circumference viewpoint images are arranged on the frame of arbitrary video standards and the frame of the arbitrary video standards is generated, and the pixel values of the pixel in the predetermined position on the generated frame are replaced by the control data for controlling the image display apparatus and output as video signals of the arbitrary video standards. Then, by the image display apparatus, the control data is extracted from the video signals, the entire-circumference viewpoint images are read out from the video signals, and the read out entire-circumference viewpoint images are displayed on a display according to the extracted control data.

According to the first embodiment of the invention, the entire-circumference viewpoint images of the subject and the control data can be input to the image display apparatus as the video signals of the arbitrary video standards.

According to the second embodiment of the invention, the video signals of the arbitrary video standards containing the entire-circumference viewpoint images of the subject and the control data can be acquired, and the subject can be displayed as a stereoscopic image seen from the entire circumference.

According to the third embodiment of the invention, the entire-circumference viewpoint images of the subject and the control data can be input to the image display apparatus as the video signals of the arbitrary video standards, and the subject can be displayed as a stereoscopic image seen from the entire circumference in the image display apparatus.

Embodiments of the invention will now be described with reference to the accompanying drawings, throughout which like parts are referred to by like references, and in which:
Fig. 1 is a block diagram showing a configuration example of a three-dimensional image display system to which embodiments of the invention are applied.
Fig. 2 is a diagram for explanation of the case of 360 entire circumference viewpoint images.
Fig. 3 shows an example of storing 360 viewpoint images in two DVI frames.
Figs. 4A to 4C show a position of an information bit.
Fig. 5 shows an example of control data quadruply recorded in the information bits.
Fig. 6 is a block diagram showing a configuration example of an image signal processing apparatus in Fig. 1.
Fig. 7 is a flowchart for explanation of control data embedding processing by the image signal processing apparatus.
Fig. 8 is a block diagram showing a configuration example of an entire circumference stereoscopic image display apparatus in Fig. 1.
Fig. 9 is a block diagram showing a configuration example of a computer.

Hereinafter, the best modes for implementing the invention (hereinafter, referred to as embodiments) will be explained in detail with reference to the drawings.

### [Configuration example of three-dimensional image display system]

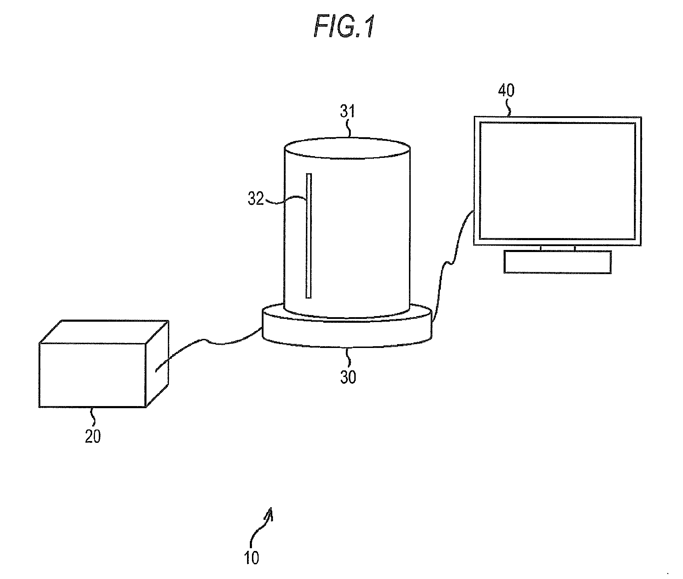

Fig. 1 shows a configuration example of a three-dimensional image display system to which embodiments of the invention are applied. The three-dimensional image display system 10 includes an image signal processing apparatus 20, an entire circumference stereoscopic image display apparatus 30, and a flat display 40.

The image signal processing apparatus 20 arranges externally input entire-circumference viewpoint images on frames of video standards having general versatility that can be input to a general flat display 40 (a liquid crystal monitor, a television receiver, or the like), and outputs them to the entire circumference stereoscopic image display apparatus 30. As below, as the video standards having general versatility, DVI (digital Visual interface) standards will be explained, however, the video standards having general versatility are not limited to the DVI standards.

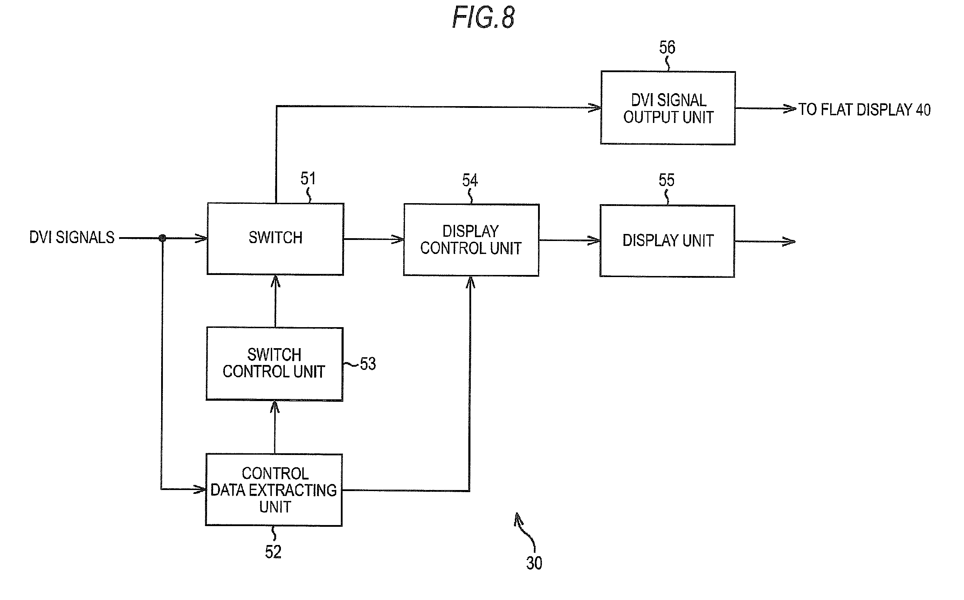

The entire circumference stereoscopic image display apparatus 30 includes a display unit 55 (Fig. 8) in a cylindrical part 31 provided with plural slits 32. The entire circumference stereoscopic image display apparatus 30 extracts control data from the respective frames (hereinafter, also referred to as "DVI frames") of video signals of DVI standards (hereinafter, also referred to as "DVI signals") input from the image signal processing apparatus 20 and extracts the entire-circumference viewpoint images, and displays the entire-circumference viewpoint images in a predetermined sequence on the display unit 55 according to the extracted control data. Concurrently, the cylindrical part 31 is rotationally driven. A user who watches the side surface of the cylindrical part 31 from an arbitrary direction glimpses the images of the display unit 55 via the slit 32, and thereby, the user is able to visually recognize the stereoscopic images over the entire circumference of a subject.

Further, the entire circumference stereoscopic image display apparatus 30 relays the DVI signals input from the image signal processing apparatus 20 to the flat display 40 according to the extracted control data.

Note that, to the entire circumference stereoscopic image display apparatus 30, an entire circumference stereoscopic image display apparatus that has been proposed in commonly-owned Japanese Patent Application No. 2008-317522 may be applied.

The flat display 40 displays the images of the DVI signals input from the image signal processing apparatus 20 via the entire circumference stereoscopic image display apparatus 30.

In the image signal processing apparatus 20, the frames of DVI standards in which the viewpoint images are stored may be encoded using a predetermined encoding method (MPEG2 method or the like) and output, and, in the entire circumference stereoscopic image display apparatus 30 and the flat display 40, they may be decoded and displayed.

### [Explanation of entire-circumference stereoscopic images]

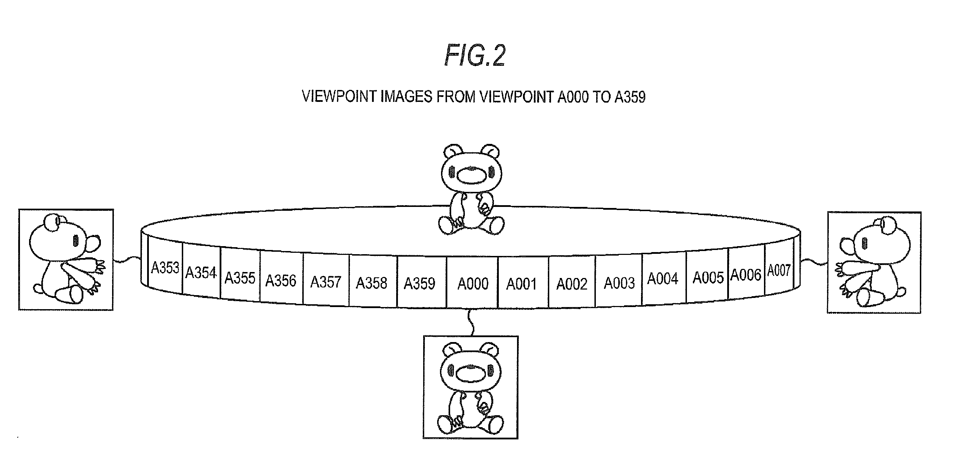

Fig. 2 shows the case where 360 viewpoints are provided by equally dividing the circumference around a subject into 360 parts and viewpoint images are obtained by simultaneously imaging the subject from the respective viewpoints. The viewpoint images may be generated not by actually imaging the subject, but by assuming the states when the subject is seen from the respective viewpoints using computer graphics or the like.

In the case of the same drawing, 360 viewpoint images are obtained. Here, it is assumed that, with a predetermined position (for example, in front of the subject) as reference, a viewpoint image seen from there is A000, and subsequently, viewpoint images obtained at viewpoint intervals of 1° are A001, A002, ..., A359.

The number of viewpoints provided in the entire circumference of the subject, in other words, the number of viewpoint images is not limited to 360, but may be the smaller number or the larger number. The larger the number, the smoother the stereoscopic images of the subject can be displayed.

### [Arrangement example of storing viewpoint images in DVI frames]

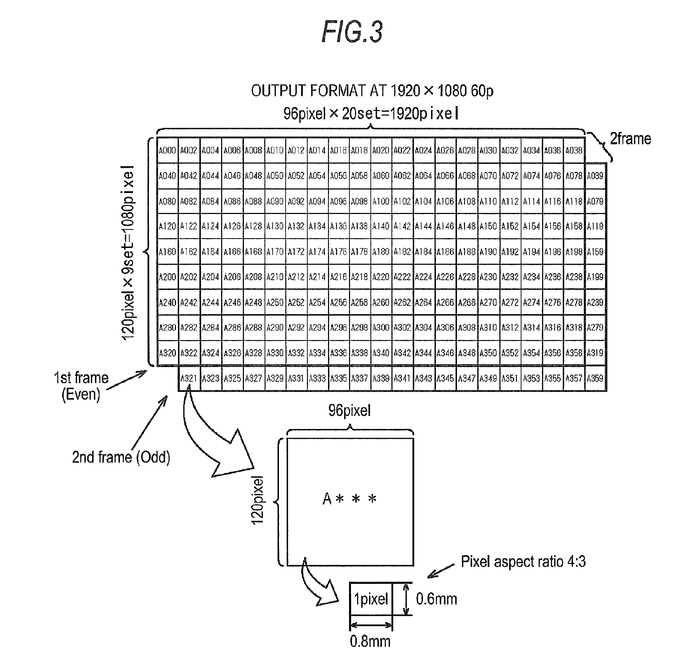

Fig. 3 shows an example of storing entire-circumference viewpoint images A000 to A359 in two DVI frames. In the case of the example, even-numbered images of the entire-circumference viewpoint images A000 to A359 are sorted into an even frame and odd-numbered images are sorted into an odd frame, and further, the viewpoint images adjacent to the same position of the respective frames are stored. That is, 180 viewpoint images are arranged in one DVI frame, and, when the image size of the DVI frame is 1920 x 1080 pixels, it is necessary to set the image size of the respective viewpoint images to 96 x 120 pixels.

Note that the number of DVI frames for sorting the entire-circumference viewpoint images is not limited to two. For example, the entire-circumference viewpoint images A000 to A359 may equally be divided into three and stored in three DVI frames, or equally be divided into four and stored in four DVI frames.

### [Position of information bit]

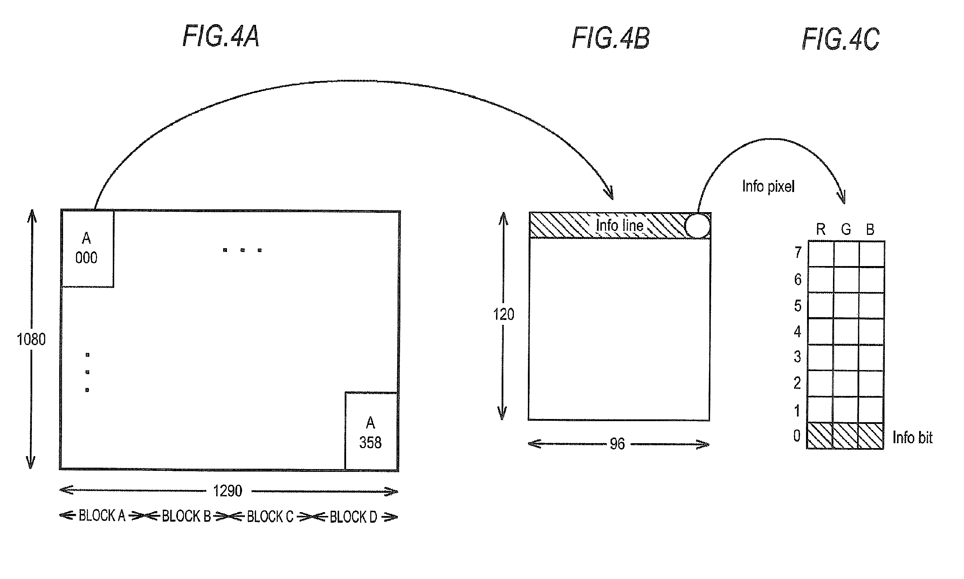

Figs. 4A to 4C show a position for embedding the control data for the entire circumference stereoscopic image display apparatus 30 in the viewpoint images, i.e., a position of an information bit.

In each of the 180 viewpoint images arranged in one DVI frame as shown in Fig. 4A, the uppermost one row (= 96 pixels) is used as an information line (Info line) for storing the control data as shown in Fig. 4B. The position of the information line in each viewpoint image is not limited to the uppermost row.

Further, as shown in Fig. 4C, of pixel values of the respective pixels of the information line, the lowermost one bits of the respective values of R, G, B are used as an information bit (Info bit). That is, three bits of information bit can be secured with respect to each pixel on the information line.

Therefore, for one DVI frame in which 180 viewpoint images are arranged, 51840 bits of the information bits (= 180 x 96 (pixels) x 3 (bits)) can be secured. In this manner, using the lowermost one bits of the respective values of R, G, B of the pixel values as the information bit, the deterioration of image quality can be minimized.

Note that, as shown in Fig. 4A, one DVI frame is divided into four blocks (blocks A to D) and the same control data is multiplexed and recorded in the information bits of the respective blocks, that is, the control data is quadruply recorded. In this case, 12960 bits (=51840/4) of control data can be stored. In this manner, by multiplexing and recording the control data, errors (loss, bit inversion, or the like) occurring in the control data can be addressed.

The multiplex recording of the control data is not limited to quadruple, but triple or more may be applied for addressing errors. The control data is not multiplexed in a space direction within the same DVI frame, but the data may be multiplexed in a time-series direction using DVI frames temporally before and after in which viewpoint images imaged at different times are arranged.

Further, for example, in the case where the respective values of R, G, B of the pixel values of the pixels are 8 bits, the 8 bits (256 levels) are employed as R, G, B values with respect to the pixels not in the information line, and, with respect to the pixels in the information line, the lowermost one bits are replaced by the control data, and the values of R, G, B are not 7 bits (128 levels), but the lowermost one bits are regarded as zero and processed as 8 bits (256 levels) of values.

### [Example of control data]

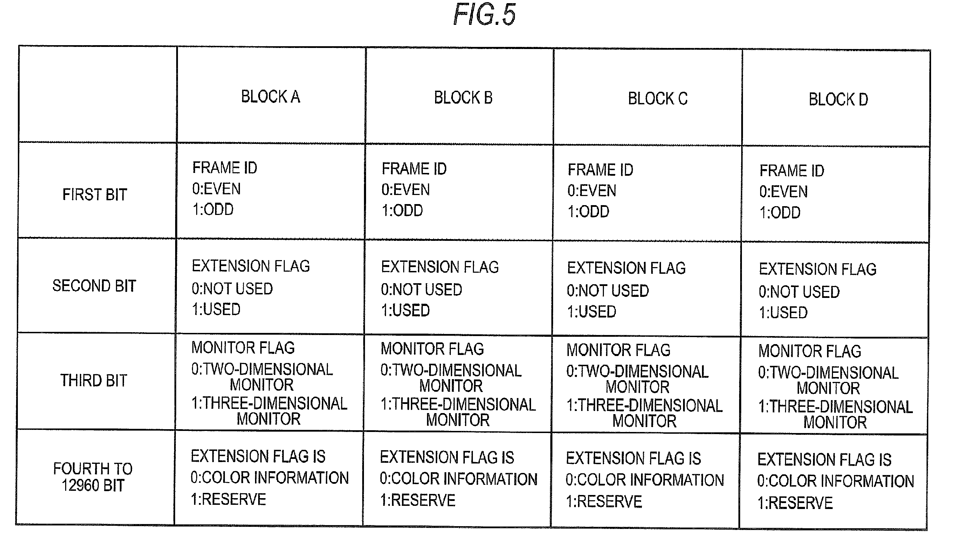

Fig. 5 shows an example of control data quadruply recorded in one DVI frame. As described above, in the case where the control data is quadruply recorded in the information bits of the 51840 bits provided in one DVI frame, 12960 bits of control data can be recorded.

For example, of the 12960 bits, in the first one bit (the first bit), a frame ID indicating whether the DVI frame is an even frame or an odd frame is recorded. For example, in the case of an even frame, the frame ID is set to "0" and, in the case of an odd frame, the frame ID is set to "1".

In the second one bit (the second bit), an extension flag indicating whether the third and subsequent bits are used for storage of the control data or not is recorded. For example, if they are not used, the extension flag is set to "0" and, if they are used, the extension flag is set to "1".

In the third one bit (third bit), a monitor flag indicating whether the DVI frame is displayed on a two-dimensional monitor (the flat display 40 in Fig. 1 or the like) or displayed on a three-dimensional monitor (the entire circumference stereoscopic image display apparatus 30 in Fig. 1 or the like) is recorded. For example, in the case where the frame is displayed on a two-dimensional monitor, the monitor flag is set to "0" and, in the case where the frame is displayed on a three-dimensional monitor, the monitor flag is set to "1".

The monitor flag may be increased into two bits, for example, to take four kinds of values, and, in the case where the frame is displayed on a two-dimensional monitor only, the monitor flag may be set to "01", in the case where the frame is displayed on a three-dimensional monitor only, the monitor flag may be set to " 10 ", and, in the case where the frame is displayed on both a two-dimensional monitor and a three-dimensional monitor, the monitor flag may be set to "11".

In the fourth and subsequent bits (the fourth to 12960 bits), in the case where the extension flag recorded in the second one bit is "0", that is, in the case where the extension bit is not used, the values of the lowermost bits of the pixel values that the pixels originally have are recorded. In the case where the extension flag recorded in the second one bit is "1", that is, in the case where the extension bit is used, the fourth and subsequent bits (the fourth to 12960 bits) are secured as reserve area (reserve) for recording the control data.

### [Configuration example of image signal processing apparatus 20]

Next, a detailed configuration example of the image signal processing apparatus 20 forming the three-dimensional image display system 10 will be explained.

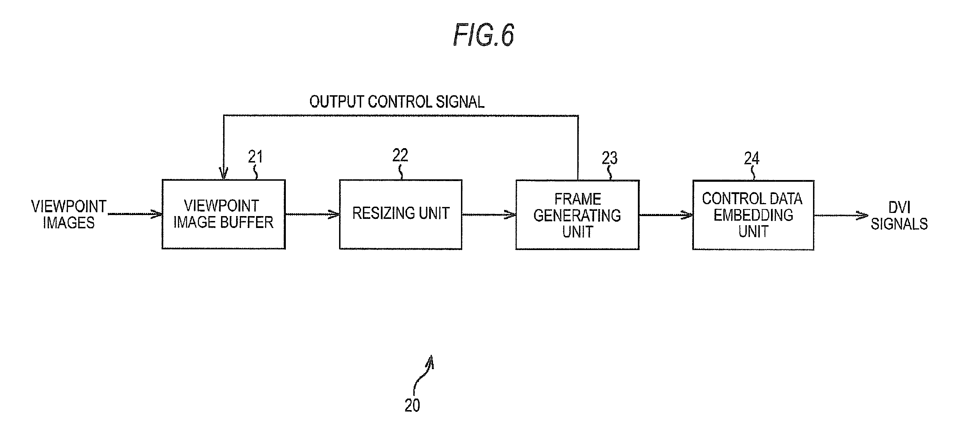

Fig. 6 is a block diagram showing the detailed configuration example of the image signal processing apparatus 20. The image signal processing apparatus 20 includes a viewpoint image buffer 21, a resizing unit 22, a frame generating unit 23, and a control data embedding unit 24.

The viewpoint image buffer 21 buffers the externally input entire-circumference viewpoint images, and outputs the buffered viewpoint images to the resizing unit 22 in a predetermined sequence according to an output control signal from the frame generating unit 23.

The resizing unit 22 resizes (reduces or enlarges) the viewpoint images input from the viewpoint image buffer 21 in response to the number of viewpoint images arranged in one DVI frame and outputs them to the frame generating unit 23. In this case, 180 viewpoint images of the entire-circumference viewpoint images A000 to A359 are arranged, and, when the DVI frame has 1290 x 1080 pixels, the respective viewpoint images are resized to 96 x 120 pixels.

The frame generating unit 23 arranges the resized viewpoint images input from the resizing unit 22 as shown in Fig. 2 to generate DVI frames and output them to the control data embedding unit 24.

The control data embedding unit 24 stores the control data in the information bits (the lowermost bits of the pixel values of the pixels in the information lines provided in the uppermost rows of the respective viewpoint images) of the respective DVI frames input from the frame generating unit 23 and outputs them to the downstream entire circumference stereoscopic image display apparatus 30.

### [Operation of image signal processing apparatus 20]

Next, an operation of the image signal processing apparatus 20 will be explained.

When the entire-circumference viewpoint images are externally input to the image signal processing apparatus 20, they are buffered in the viewpoint image buffer 21. When the frame generating unit 23 outputs the output control signal to the viewpoint image buffer 21, the viewpoint image buffer 21 outputs the buffered viewpoint images to the resizing unit 22 in a predetermined sequence according thereto.

The resizing unit 22 resizes and outputs the viewpoint images input from the viewpoint image buffer 21 to the frame generating unit 23. The frame generating unit 23 generates DVI frames by arranging the even-numbered images of the resized viewpoint images input from the resizing unit 22 in the even frame and the odd-numbered images in the odd frame, and outputs them to the control data embedding unit 24.

The control data embedding unit 24 stores the control data in the information bits of the respective DVI frames input from the frame generating unit 23, and outputs them to the downstream entire circumference stereoscopic image display apparatus 30.

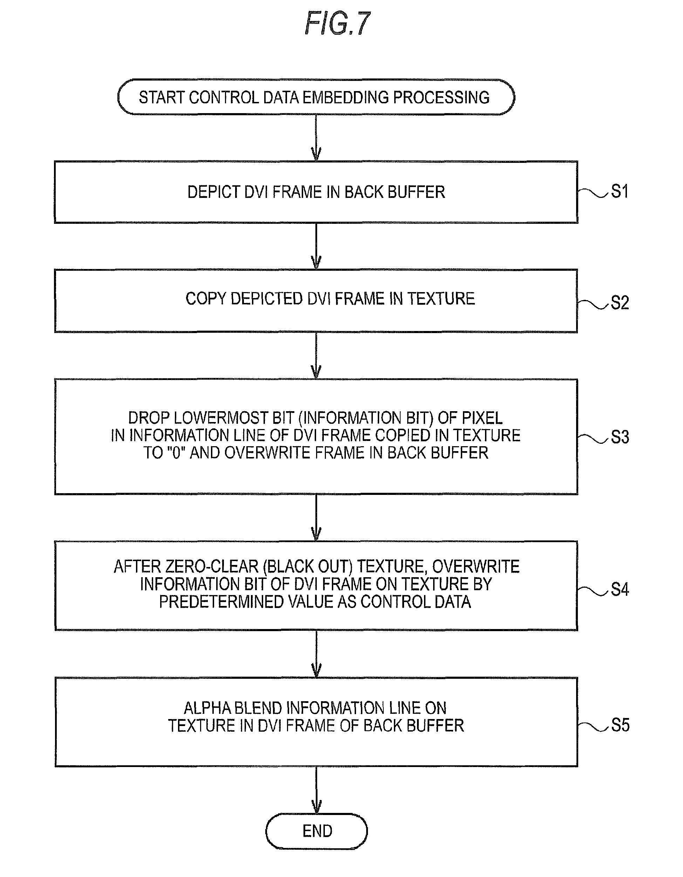

Here, control data embedding processing by the control data embedding unit 24 will be described in detail. Fig. 7 is a flowchart for explanation of the control data embedding processing by the control data embedding unit 24.

The control data embedding processing described as below is on the assumption that the control data embedding unit 24 has a GPU (Graphics Processing Unit) inside thereof and uses Direct X.

At step S1, the control data embedding unit 24 depicts the DVI frames input from the frame generating unit 23 in a back buffer built in itself. At step S2, the control data embedding unit 24 copies the DVI frames depicted in the back buffer in a texture.

At step S3, the control data embedding unit 24 uses a shader program to overwrite the DVI frames copied in the texture in the back buffer while dropping the values of the information bits (the lowermost bits of the pixel values of the respective values of R, G, B) of the respective pixels in the information lines (the uppermost one rows of the respective viewpoint images) to "0".

At step S4, after zero-clearing (blacking out) the texture, the control data embedding unit 24 overwrites predetermined values as control data in the information bits of the DVI frames on the texture. For example, in the case where the DVI frame is an even frame, "0" is overwritten as the frame ID in the first one of the information bit. On the other hand, in the case where the DVI frame is an odd frame, "1" is overwritten as the frame ID in the first one of the information bit.

At step S5, the control data embedding unit 24 alpha-blends only the information lines of the DVI frames on the texture in the DVI frames on the back buffer (having the information bits dropped to "0" at step S3). Here, both of the blending ratios of the DVI frames on the back buffer to the information lines of the DVI frames on the texture are set to 100%. This is the end of the control data embedding processing.

According to the above described control data embedding processing, the DVI frames in which the control data are embedded in the information bits are depicted in the back buffer built in the control data embedding unit 24, and, by outputting them as DVI signals, the viewpoint images and the control data can be supplied to the downstream while the deterioration of image quality of the viewpoint images is minimized.

In the above described control data embedding processing, conditional branching is not provided and that fits the characteristics of GPU not good at processing including conditional branching, and thus, the control data embedding unit 24 with the GPU inside thereof can execute the control data embedding processing in real time.

### [Other embedding methods of control data]

Now, as is the case of the above described control data embedding processing, in some cases, processing of rewriting only the lowermost bits of the pixel values of the pixels in the information lines may be difficult.

In this case, the entire of the pixel values of only one pixel for each block of the DVI frames may be used for storing the frame ID of the control data. Specifically, for example, pixel values (R,G,B) of one pixel in the upper left corner of each block may be set to (0, 0, 0) in the case of an even frame and may be set to (1,0,0) in the case of an odd frame. In this case, in the DVI frame, only four pixels are fixed to black points ((0,0,0) or (1,0,0)), and, when the pixels are displayed, the pixel values may be interpolated using the adjacent pixels and displayed. The control data other than the frame ID may be stored in the same manner.

Note that, when four pixels are fixed to black points as the frame ID of the control data, if the DVI frame is compression-coded using the MPEG2 method or the like, the black points are not left after decoding, that is, the frame ID of the control data may not be transmitted to the downstream.

Accordingly, in the case where the DVI frame is compression-coded, a predetermined area including several pixels is provided with respect to each block of the DVI frame, and the pixel values of all pixels in the predetermined area may be used for storage of the frame ID of the control data.

Specifically, for example, a predetermined area is provided in the upper left corner of each block, only in the case of an even frame, the pixel values (R, G, B) of the pixels therein may be changed to a bright point (for example, the maximum values (255, 255, 255)), and, in the case of an odd frame, they may be unchanged. In this manner, the four predetermined areas on the DVI frame are bright points only in the case where the DVI frame is an even frame, and, when the pixels of the areas are displayed, the pixel values may be interpolated using the pixels of the same area of the adjacent pixels and displayed.

When the predetermined area as the frame ID of the control data is a bright point, even in the case where the DVI frame is compression-coded by the MPEG2 method or the like, the brightness point can be left though the brightness point blurs around or fades after decoding. Therefore, even when the DVI frame containing the frame ID as the control data is compression-coded and supplied to the downstream, the frame ID as the control data can be read out at the downstream.

As yet another method of embedding the control data in the DVI frame, control data may be embedded using electronic watermarking, for example, in the DVI frame in which viewpoint images are arranged.

Any of the above described control data embedding processing and the other methods includes embedding of control data in the pixel values of the viewpoint images, and may be applied to video signals having versatility other than the DVI signals.

### [Configuration example and operation of entire circumference stereoscopic image display apparatus 30]

Next, Fig. 8 shows a configuration example of the entire circumference stereoscopic image display apparatus 30 to which the DVI signals from the image signal processing apparatus 20 are input.

The entire circumference stereoscopic image display apparatus 30 includes a switch 51, a control data extracting unit 52, a switch control unit 53, a display control unit 54, a display unit 55, and a DVI signal output unit 56.

The switch 51 outputs the DVI signals input from the upstream image signal processing apparatus 20 to either of the display control unit 54 or the DVI signal output unit 56 according to control from the switch control unit 53.

The control data extracting unit 52 extracts the control data from the DVI signals input from the upstream image signal processing apparatus 20 and performs error correction of the control data according to need. Then, the control data extracting unit 52 outputs the monitor flag of the extracted control data to the switch control unit 53. Further, the control data extracting unit 52 outputs the frame ID and the extension flag of the extracted control data to the display control unit 54.

The switch control unit 53 controls switching of the switch 51 according to the monitor flag as the control data input from the control data extracting unit 52. That is, in the case where the monitor flag is "0", the unit allows the switch 51 to switch the output to the DVI signal output unit 56, and, in the case where the monitor flag is "1", the unit allows the switch 51 to switch the output to the display control unit 54.

The display control unit 54 extracts the viewpoint images from the DVI frames of the DVI signals input via the switch 51. Further, the display control unit 54 allows the display unit 55 to display the extracted viewpoint images while referring to the frame ID and extension flag as the control data input from the control data extracting unit 52.

The DVI signal output unit 56 outputs the DVI signals input via the switch 51 to the downstream flat display 40.

In the entire circumference stereoscopic image display apparatus 30, the DVI signals from the upstream image signal processing apparatus 20 are input to the switch 51 and the control data extracting unit 52. In the control data extracting unit 52, the monitor flag of the control data is extracted from the DVI signals and output to the switch control unit 53. The switch control unit 53 switches the output destination of the switch 51 to the display unit 55 or the DVI signal output unit 56 based on the monitor flag. Therefore, according to the control data contained in the DVI signals, the display destination of the image corresponding to the DVI signals can be switched to the display unit 55 or the DVI signal output unit 56.

Now, the above described series of processing of the image signal processing apparatus 20 and the entire circumference stereoscopic image display apparatus 30 may be executed by hardware or software. In the case where the series of processing is executed by software, programs forming the software are installed from a program recording medium into a computer incorporated in dedicated hardware or into a general-purpose personal computer that can execute various functions with installed various programs.

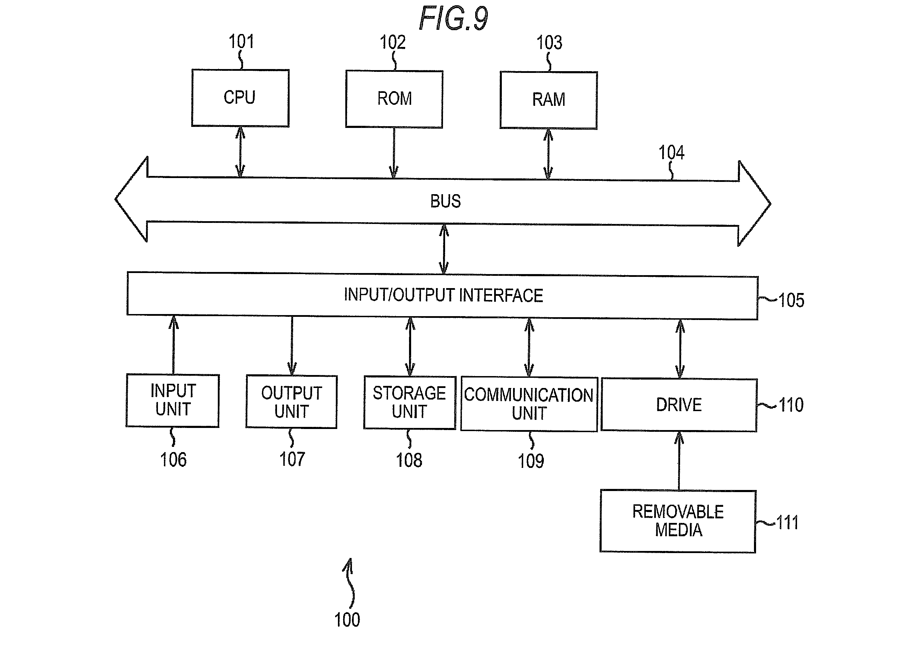

Fig. 9 is a block diagram showing a configuration example of hardware of a computer that executes the above described series of processing using programs.

In the computer 100, a CPU (Central Processing Unit) 101, a ROM (Read Only Memory) 102, a RAM (Random Access Memory) 103 are connected to one another via a bus 104.

To the bus 104, an input/output interface 105 is further connected. To the input/output interface 105, an input unit 106 including a keyboard, a mouse, a microphone, etc., an output unit 107 including a display, speakers etc. , a storage unit 108 including a hard disk, a nonvolatile memory, etc., a communication unit 109 including a network interface etc. , a drive 110 that drives removable media 111 including a magnetic disk, an optical disc, a magneto-optical disc, a semiconductor memory, or the like are connected.

In the computer having the above configuration, the CPU 101 loads and executes the program stored in the storage unit 108, for example, in the RAM 103 via the input/output interface 105 and the bus 104, and thereby, the above described series of processing is performed.

The programs executed by the computer may be programs in which processing is performed in the time-series sequence along the sequence explained in this specification, or may be programs in which processing is performed in parallel or at necessary times when a call is made or the like.

Further, the programs may be processed by a single computer or processed in a distributed manner by plural computers. Furthermore, the programs may be transferred to a remote computer.

Moreover, in this specification, the system refers to an entire system including plural apparatuses.

The embodiments of the invention are not limited to the above described embodiments, and various changes may be made without departing from the scope of the invention.

The present application contains subject matter related to that disclosed in Japanese Priority Patent Application JP 2009-231674 filed in the Japan Patent Office on October 5, 2009.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

A preferred embodiment of the invention provides an image display system comprising:
an image display apparatus that displays a stereoscopic image of a subject seen from an entire circumference; and
an image signal processing apparatus that supplies entire-circumference viewpoint images including plural viewpoint images respectively corresponding to plural viewpoints provided on a circumference around the subject to the image display apparatus,
wherein the image signal processing apparatus includes buffering means for buffering the input entire-circumference viewpoint images,
generating means for arranging the buffered entire-circumference viewpoint images on a frame of arbitrary video standards to generate the frame of the arbitrary video standards, and
replacing means for replacing pixel values of a pixel in a predetermined position on the generated frame by control data for controlling the image display apparatus and outputting the control data as video signals of the arbitrary video standards, and
wherein the image display apparatus includes extracting means for extracting the control data from the video signals input from the image signal processing apparatus, and
display control means for reading out the entire-circumference viewpoint images from the video signals and allowing a display to display the read out entire-circumference viewpoint images according to the extracted control data.

Another preferred embodiment provides an image signal processing apparatus that supplies images subject to an image display apparatus,
wherein the image signal processing apparatus replaces pixel values of a pixel in a predetermined position on the images by control data for controlling the image display apparatus.

Another preferred embodiment provides an image display system comprising:
an image display apparatus displaying images on an entire circumference; and
an image signal processing apparatus that supplies images subject to the image display apparatus,
wherein the image signal processing apparatus replaces pixel values of a pixel in a predetermined position on the images by control data for controlling the image display apparatus.

Another preferred embodiment provides an image display system comprising:
an image display apparatus that displays a stereoscopic image of a subject seen from an entire circumference; and
an image signal processing apparatus that supplies entire-circumference viewpoint images including plural viewpoint images respectively corresponding to plural viewpoints provided on a circumference around the subject to the image display apparatus,
wherein the image signal processing apparatus includes
a buffering unit configured to buffer the input entire-circumference viewpoint images,
a generating unit configured to arrange the buffered entire-circumference viewpoint images on a frame of arbitrary video standards to generate the frame of the arbitrary video standards, and
a replacing unit configured to replace pixel values of a pixel in a predetermined position on the generated frame by control data for controlling the image display apparatus and output the control data as video signals of the arbitrary video standards, and
wherein the image display apparatus includes
an extracting unit configured to extract the control data from the video signals input from the image signal processing apparatus, and
a display control unit configured to read out the entire-circumference viewpoint images from the video signals and allow a display to display the read out entire-circumference viewpoint images according to the extracted control data.

## Claims

1. An image signal processing apparatus that supplies entire-circumference viewpoint images including plural viewpoint images respectively corresponding to plural viewpoints provided on a circumference around a subject to an image display apparatus that displays a stereoscopic image of the subject seen from an entire circumference, comprising:
buffering means for buffering the input entire-circumference viewpoint images;
generating means for arranging the buffered entire-circumference viewpoint images on a frame of arbitrary video standards to generate the frame of the arbitrary video standards; and
replacing means for replacing pixel values of a pixel in a predetermined position on the generated frame by control data for controlling the image display apparatus and outputting the control data as video signals of the arbitrary video standards.

2. The image signal processing apparatus according to claim 1, wherein the replacing means replaces the lowermost bit of the pixel values of the pixel in the predetermined position on the generated frame by the control data.

3. The image signal processing apparatus according to claim 1, wherein the replacing means replaces the entire of the pixel values of the pixel in the predetermined position on the generated frame by the control data.

4. The image signal processing apparatus according to claim 2 or 3, wherein the replacing means replaces the pixel values of pixels in plural predetermined positions on the generated frame by the control data, and thereby, multiplexes and recodes the control data.

5. The image signal processing apparatus according to any one of claims 1 to 4, wherein the control data contains information for commanding the image display apparatus whether to output the input video signals to another display or not.

6. An image signal processing method of an image signal processing apparatus that supplies entire-circumference viewpoint images including plural viewpoint images respectively corresponding to plural viewpoints provided on a circumference around a subject to an image display apparatus that displays a stereoscopic image of the subject seen from an entire circumference, comprising the steps of:
by the image signal processing apparatus,
the buffering step of buffering the input entire-circumference viewpoint images;
the generating step of arranging the buffered entire-circumference viewpoint images on a frame of arbitrary video standards to generate the frame of the arbitrary video standards; and
the replacing step of replacing pixel values of a pixel in a predetermined position on the generated frame by control data for controlling the image display apparatus and outputting the control data as video signals of the arbitrary video standards.

7. A control program of an image signal processing apparatus that supplies entire-circumference viewpoint images including plural viewpoint images respectively corresponding to plural viewpoints provided on a circumference around a subject to an image display apparatus that displays a stereoscopic image of the subject seen from an entire circumference, the program allowing a computer of the image signal processing apparatus to execute processing comprising the steps of:
the buffering step of buffering the input entire-circumference viewpoint images;
the generating step of arranging the buffered entire-circumference viewpoint images on a frame of arbitrary video standards to generate the frame of the arbitrary video standards; and
the replacing step of replacing pixel values of a pixel in a predetermined position on the generated frame by control data for controlling the image display apparatus and outputting the control data as video signals of the arbitrary video standards.

8. An image display apparatus that displays a stereoscopic image of a subject seen from an entire circumference based on video signals input from an image signal processing apparatus including buffering means for buffering entire-circumference viewpoint images including plural viewpoint images respectively corresponding to plural viewpoints provided on a circumference around the subject, generating means for arranging the buffered entire-circumference viewpoint images on a frame of arbitrary video standards to generate the frame of the arbitrary video standards, and replacing means for replacing pixel values of a pixel in a predetermined position on the generated frame by control data for controlling the image display apparatus and outputting the control data as video signals of the arbitrary video standards, comprising:
extracting means for extracting the control data from the video signals; and
display control means for reading out the entire-circumference viewpoint images from the video signals and allowing a display to display the read out entire-circumference viewpoint images according to the extracted control data.

9. The image display apparatus according to claim 8, further comprising output means for outputting the input video signals to another display in response to information for commanding whether to output the input video signals to the other display or not contained in the control data.

10. An image display method of an image display apparatus that displays a stereoscopic image of a subject seen from an entire circumference based on video signals input from an image signal processing apparatus including buffering means for buffering entire-circumference viewpoint images including plural viewpoint images respectively corresponding to plural viewpoints provided on a circumference around the subject, generating means for arranging the buffered entire-circumference viewpoint images on a frame of arbitrary video standards to generate the frame of the arbitrary video standards, and replacing means for replacing pixel values of a pixel in a predetermined position on the generated frame by control data for controlling the image display apparatus and outputting the control data as video signals of the arbitrary video standards, comprising the steps of:
by the image display apparatus,
the extracting step of extracting the control data from the video signals; and
the display control step of reading out the entire-circumference viewpoint images from the video signals and allowing a display to display the read out entire-circumference viewpoint images according to the extracted control data.

11. A control program of an image display apparatus that displays a stereoscopic image of a subject seen from an entire circumference based on video signals input from an image signal processing apparatus including buffering means for buffering entire-circumference viewpoint images including plural viewpoint images respectively corresponding to plural viewpoints provided on a circumference around the subject, generating means for arranging the buffered entire-circumference viewpoint images on a frame of arbitrary video standards to generate the frame of the arbitrary video standards, and replacing means for replacing pixel values of a pixel in a predetermined position on the generated frame by control data for controlling the image display apparatus and output the control data as video signals of the arbitrary video standards, the program allowing a computer of the image display apparatus to execute processing comprising the steps of:
the extracting step of extracting the control data from the video signals; and
the display control step of reading out the entire-circumference viewpoint images from the video signals and allowing a display to display the read out entire-circumference viewpoint images according to the extracted control data.

12. An image signal processing apparatus that supplies entire-circumference viewpoint images including plural viewpoint images subject to an image display apparatus, comprising:
buffering means for buffering the input entire-circumference viewpoint images;
generating means for arranging the buffered entire-circumference viewpoint images on a frame of arbitrary video standards to generate the frame of the arbitrary video standards; and
replacing means for replacing pixel values of a pixel in a predetermined position on the generated frame by control data for controlling the image display apparatus.

13. An image signal processing apparatus that supplies entire-circumference viewpoint images including plural viewpoint images respectively corresponding to plural viewpoints provided on a circumference around a subject to an image display apparatus that displays a stereoscopic image of the subject seen from an entire circumference, comprising:
a buffering unit configured to buffer the input entire-circumference viewpoint images;
a generating unit configured to arrange the buffered entire-circumference viewpoint images on a frame of arbitrary video standards to generate the frame of the arbitrary video standards; and
a replacing unit configured to replace pixel values of a pixel in a predetermined position on the generated frame by control data for controlling the image display apparatus and output the control data as video signals of the arbitrary video standards.

14. An image display apparatus that displays a stereoscopic image of a subject seen from an entire circumference based on video signals input from an image signal processing apparatus including a buffering unit configured to buffere entire-circumference viewpoint images including plural viewpoint images respectively corresponding to plural viewpoints provided on a circumference around the subject, a generating unit configured to arrange the buffered entire-circumference viewpoint images on a frame of arbitrary video standards to generate the frame of the arbitrary video standards, and a replacing unit configured to replace pixel values of a pixel in a predetermined position on the generated frame by control data for controlling the image display apparatus and output the control data as video signals of the arbitrary video standards, comprising:
an extracting unit configured to extract the control data from the video signals; and
a display control unit configured to read out the entire-circumference viewpoint images from the video signals and allow a display to display the read out entire-circumference viewpoint images according to the extracted control data.

15. An image signal processing apparatus that supplies entire-circumference viewpoint images including plural viewpoint images subject to an image display apparatus, comprising:
a buffering unit configured to buffer the input entire-circumference viewpoint images;
a generating unit configured to arrange the buffered entire-circumference viewpoint images on a frame of arbitrary video standards to generate the frame of the arbitrary video standards; and
a replacing unit configured to replace pixel values of a pixel in a predetermined position on the generated frame by control data for controlling the image display apparatus.
